# DEMANDE DE BREVET EUROPEEN

(11) **EP 1 465 425 A1**
(43) Date de publication de la demande: **06.10.2004**
(21) Numéro de dépôt: 04290538.0
(22) Date de dépôt: 27.02.2004
(51) Int. Cl.: H04N 7/14, H04N 7/15

(54) **Procédé et système de controle d'une chaine vidéo distante**

(30) Priorité: 13.03.2003 FR 0303122
(71) Demandeur: FRANCE TELECOM, 75015 Paris (FR)
(72) Inventeur: Ladouceur, Francois, 43700 Arsac en Velay (FR); Hardouin, Briac, 75018 Paris (FR)
(74) Mandataire: de Roquemaurel, Bruno

(57) **Abrégé**

Procédé de commande d'une chaîne de traitement vidéo (20) distante, produisant un flux vidéo transmis à un terminal en vue d'agir sur le flux vidéo transmis, ce procédé comprenant des étapes dans lesquelles le terminal transmet vers la chaîne de traitement vidéo distante, une commande pour modifier le flux vidéo transmis, et la chaîne de traitement vidéo exécute la commande sur le flux vidéo avant de le transmettre au terminal, les commandes de modification du flux vidéo, exécutables par la chaîne de traitement vidéo (20) comprenant des commandes comportant la définition d'une région d'image de l'image contenue dans le flux vidéo transmis, associée la définition d'un traitement à appliquer à la région d'image.

## Description

La présente invention concerne un procédé et un dispositif de commande d'une chaîne vidéo distante.

Elle s'applique notamment, mais non exclusivement aux télécommunications visiophoniques.

D'une manière classique, les télécommunications visiophoniques font intervenir une chaîne de traitement vidéo comprenant un module de capture, un module de codage et un module de transmission.

Dans les télécommunications visiophoniques, seuls quelques paramètres peuvent être modifiés par les participants à la communication pour optimiser le signal vidéo qu'ils reçoivent. Ces paramètres peuvent être regroupés en deux catégories.

La première catégorie de paramètres rassemble l'ensemble des commandes qui permettent de modifier à distance le comportement du module de codage de l'émetteur du flux vidéo, en agissant sur les paramètres qui lui sont propres. Par exemple, le protocole H.323 qui s'applique aux systèmes de communication multimédia pour les réseaux IP (Internet Protocol), offre la possibilité d'envoyer une commande permettant d'agir sur le codeur distant afin d'augmenter la qualité des images d'un flux vidéo transmis au détriment de la fluidité, ou inversement. Les commandes de cette catégorie sont trop restrictives et offrent uniquement la possibilité de traiter dans sa globalité le signal vidéo transmis.

La seconde catégorie rassemble des commandes de pilotage à distance d'une caméra, ces commandes étant définies dans des protocoles qui définissent des commandes normalisées à envoyer à une caméra distante, afin de modifier son champ de prise de vue en agissant de manière mécanique sur son orientation et sur son zoom. La mise en oeuvre de ces protocoles dans le cadre d'une télécommunication visiophonique implique l'utilisation de caméras motorisées compatibles.

La présente invention a pour but de supprimer ces inconvénients. Cet objectif est atteint par la prévision d'un procédé de commande d'une chaîne de traitement vidéo distante, produisant un flux vidéo à transmettre vers un terminal, en vue d'agir sur le flux vidéo, ce procédé comprenant des étapes au cours lesquelles le terminal transmet vers la chaîne de traitement vidéo distante, une commande pour modifier le flux vidéo, et la chaîne de traitement vidéo distante exécute la commande sur le flux vidéo avant de le transmettre au terminal.

Selon l'invention, les commandes de modification du flux vidéo, exécutables par la chaîne de traitement vidéo distante comprennent des commandes de traitement à appliquer à une région d'image, comportant la définition d'une région d'image de l'image contenue dans le flux vidéo transmis, associée à la définition d'un traitement à appliquer à la région d'image, l'exécution par la chaîne vidéo distante d'une commande de traitement à appliquer à une région d'image comportant des étapes de sélection dans le flux vidéo de la région d'image définie dans la commande, et d'application à la région d'image sélectionnée dans le flux vidéo du traitement défini dans la commande.

Selon une particularité de l'invention, ce procédé comprend en outre une étape d'activation d'un module optionnel dans la chaîne de traitement vidéo pour exécuter au moins partiellement une commande émise par le terminal.

Selon une autre particularité de l'invention, les commandes de modification du flux vidéo, exécutables par la chaîne de traitement vidéo comprennent une commande de zoom associée à une région d'image pour agrandir la région d'image, une commande de déplacement de la région d'image transmise dans le flux vidéo à la suite de l'exécution d'une commande de zoom, et éventuellement une commande d'augmentation de la résolution d'associée à une région d'image pour augmenter la résolution de la région d'image au détriment du reste de l'image transmise par le flux vidéo.

Avantageusement, la chaîne de traitement vidéo rétablit une configuration d'image par défaut dans le flux vidéo après un laps de temps prédéfini à compter de l'exécution d'une commande de modification du flux vidéo.

De préférence, les commandes de modification du flux vidéo exécutables par la chaîne de traitement vidéo comprennent une commande de rétablissement d'une configuration par défaut d'image transmise par le flux vidéo.

Selon une autre particularité de l'invention, la transmission des commandes de modification du flux vidéo transmis, est effectuée conformément au protocole H.323 ou SIP dans des messages qui sont ignorés par le terminal s'il ne les comprend pas.

L'invention concerne également un système de commande d'une première chaîne de traitement vidéo distante produisant un flux vidéo qui est transmis à un premier terminal par l'intermédiaire d'un réseau de télécommunication, en vue d'agir sur le flux vidéo transmis, ce système comprenant des moyens de transmission installés dans le premier terminal pour transmettre vers la première chaîne de traitement vidéo distante, des commandes modification du flux vidéo transmis, et des moyens de réception et d'exécution de commandes de modification de flux vidéo, installés dans la première chaîne de traitement vidéo distante, pour recevoir et exécuter des commandes de modification de flux vidéo sur le flux vidéo à transmettre par la première chaîne de traitement.

Selon l'invention, les commandes de modification du flux vidéo, exécutables par la chaîne de traitement vidéo distante comprennent des commandes de traitement à appliquer à une région d'image, comportant la définition d'une région d'image de l'image contenue dans le flux vidéo transmis, associée à la définition d'un traitement à appliquer à la région d'image, les moyens d'exécution de commandes de modification de flux vidéo, installés dans la première chaîne de traitement vidéo distante, comportant des moyens de sélection dans le flux vidéo de la région d'image définie dans une commande de traitement à appliquer à une région d'image, et des moyens d'application à la région d'image sélectionnée dans le flux vidéo du traitement défini dans la commande.

Selon une particularité de l'invention, ce système comprend des modules optionnels insérés dans la première chaîne de traitement vidéo pour exécuter au moins partiellement les commandes définissant un traitement à appliquer à une région d'image dans le flux vidéo transmis.

Avantageusement, les modules optionnels comprennent un module de recadrage.

Selon une autre particularité de l'invention, la première chaîne de traitement vidéo est installée dans un second terminal comportant des moyens de transmission pour transmettre vers une seconde chaîne de traitement vidéo, installée le premier terminal, des commandes modification d'un flux vidéo émis par la seconde chaîne de traitement vidéo, la seconde chaîne de traitement vidéo comprenant des moyens de réception et d'exécution des commandes de modification du flux vidéo qu'elle transmet.

Un mode de réalisation préféré de l'invention sera décrit ci-après, à titre d'exemple non limitatif, avec référence aux dessins annexés dans lesquels :
La figure 1 représente schématiquement un exemple de système de télécommunication visiophonique auquel s'applique le procédé selon l' invention ;
La figure 2 montre plus en détail une chaîne de traitement vidéo et de commande selon l'invention, intégrée dans un terminal ;
La figure 3 montre l'organisation logicielle des programmes installés dans un terminal.

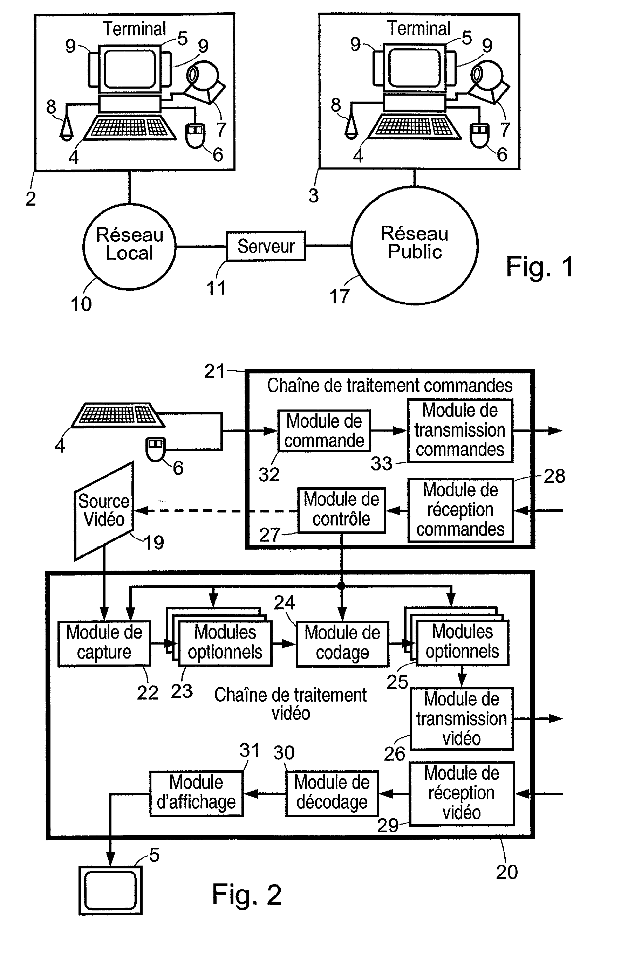

La figure 1 représente un système de télécommunication visiophonique comprenant deux terminaux 2, 3 entre lesquels une télécommunication visiophonique est établie. Chaque terminal est équipé d'un écran d'affichage 5, d'organes de commande, tels qu'un clavier 4 et une souris 6, d'une caméra 7, d'un microphone 8 et d'au moins un haut-parleur 9.

Dans l'exemple représenté sur la figure 1, le terminal 2 est connecté par l'intermédiaire d'un réseau local 10 et d'un serveur local 11 à un réseau public de télécommunication 1, tandis que le terminal 3 est connecté directement au réseau 1.

Au cours d'une télécommunication visiophonique les terminaux 2, 3 s'échangent par l'intermédiaire des réseaux 1, 10 et du serveur 11, des flux vidéo contenant les images prises par les caméras 7, ainsi que des sons captés par les microphones 8. Les flux vidéo échangés sont par exemple conformes au protocole H.263+ et au format d'image QCIF (Quarter Common Intermediate), un format d'image vidéo couramment utilisé dans les communications visiophoniques et de visioconférence. Bien entendu, l'invention peut s'appliquer également à d'autres formats d'image tels que SQCIF, CIF, 4CIF, 16 CIF.

Pour générer un tel flux vidéo, chaque terminal 2, 3 comprend une chaîne de traitement vidéo 20, telle que celle qui est représentée sur la figure 2. Cette chaîne est pilotée par une chaîne de traitement de commandes 21. La chaîne de traitement vidéo 20 comprend une partie émission vidéo, pour transmettre les images vidéo prises par la caméra ou provenant d'une autre source 19, vers un autre terminal, et une partie réception vidéo pour recevoir un flux vidéo émis par cet autre terminal et le restituer à l'écran 5. La chaîne de traitement de commandes comprend une partie émission de commandes conçue pour émettre des commandes à destination de la chaîne de traitement vidéo de l'autre terminal, et une partie réception de commandes conçue pour recevoir des commandes émises par l'autre terminal et piloter la partie émission de la chaîne de traitement vidéo en fonction des commandes reçues.

Plus précisément, la partie émission vidéo comprend un module de capture 22 qui reçoit les images vidéo 21 prises par la caméra 7 du terminal ou provenant d'une autre source, un module de codage 24 conçu pour coder le flux vidéo fourni par le module de capture 22, et en particulier compresser ce flux en vue de l'adapter au débit de transmission attribué, et un module de transmission 26 connecté à un module de communication du terminal pour mettre le flux vidéo codé, généré par le module de codage 24, sous la forme de paquets en vue de son émission.

La partie réception vidéo comprend un module de réception vidéo 29 conçu pour reconstituer un flux vidéo à partir de paquets reçus par le terminal, un module de décodage vidéo 30 connecté au module de réception, et conçu pour décoder le flux vidéo, et un module d'affichage 31 qui est connecté d'un côté au module de décodage et de l'autre à l'écran d'affichage 5 du terminal, pour restituer le flux vidéo décodé.

Selon l'invention, des modules optionnels 23, 25 sont en outre insérés dans la partie émission de la chaîne de traitement vidéo 20, en amont et/ou en aval du module de codage 24, et/ou intégrés dans ce dernier en fonction de la configuration du terminal 2, 3.

La partie réception de la chaîne de traitement de commandes comprend un module 28 de réception de commandes qui délivre les commandes reçues à un module 27 de contrôle, ce module pilotant la partie émission de la chaîne de traitement vidéo, et en particulier le module de capture, les modules optionnels 23, 25 et le module de codage 24, ainsi que la source vidéo 19, le cas échéant.

La partie émission de la chaîne de traitement de commandes comprend un module 32 de commande qui est connecté aux organes de commande 4, 6 du terminal, et qui génère des commandes à partir des commandes introduites par l'utilisateur au moyen des organes de commandes 4, 6 du terminal, ainsi qu'un module 33 d'émission de commandes, connecté au module 32 de commande et qui transmet les commandes générées par le module de commande 32.

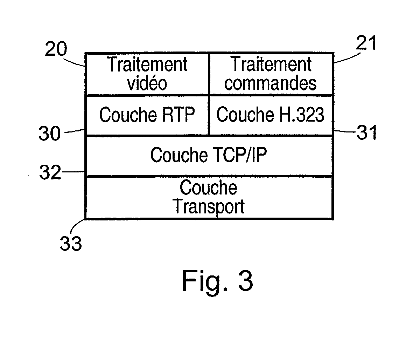

Tel que représenté sur la figure 3, les deux chaînes de traitement (vidéo et commandes) 20, 21 sont réalisées sous la forme d'une couche logicielle applicative. La couche de traitement de commandes 21 utilise une couche logicielle 31 implémentant par exemple le protocole H.323 ou SIP (Session Initiation Protocol) pour transmettre et recevoir des commandes d'un terminal distant. Dans le cas du protocole H.323, les commandes sont transmises sous la forme de messages "Facility" permettant de transmettre des données propriétaires. Dans le cas du protocole SIP, les commandes peuvent être transmises en utilisant le message "INFO". Ces deux types de messages présentent l'avantage d'être ignorés par le terminal destinataire s'il ne les comprend pas, ce qui permet de conserver l'interopérabilité des terminaux.

La couche de traitement vidéo 20 utilise une couche logicielle 30 implémentant le protocole RTP (Real Time Protocol), ou analogue, pour transmettre et recevoir des flux vidéo sous la forme de paquets. Les deux couches 30 et 31 sont conçues pour s'interfacer avec une couche 32 implémentant le protocole TCP/IP (Transmission Control Protocol/Internet Protocol) regroupant les protocoles utilisés par le réseau Internet. La couche 32 permet d'accéder physiquement au réseau en utilisant une couche transport 33.

Au cours d'une télécommunication visiophonique, par exemple, entre les terminaux 2 et 3, le terminal 2, reçoit un flux vidéo H263+ au format QCIF qui est traité par la partie réception de la chaîne de traitement vidéo 20. Grâce à l'invention, l'utilisateur peut agir sur le flux vidéo qu'il reçoit à l'aide du clavier 4 et/ou de la souris 6, en appliquant des commandes à la partie émission de la chaîne de traitement de commande 21. Ces commandes sont reçues et traitées par la partie réception de la chaîne de traitement de commande 21 de l'autre terminal 3 et servent à piloter la partie émission de la chaîne de traitement vidéo du terminal 3.

Les commandes de pilotage qui sont générées par le module de commande 32 présentent par exemple le format suivant :
Région(<spécification d'une région de l'image>,
   <Commandes à appliquer à la région>)

Typiquement, une région d'image est définie par sa forme et sa taille, par exemple "RECTANGLE(<coordonnées du point supérieur gauche>, <coordonnées du point inférieur droit>)".
En plus des commandes classiques permettant d'agir sur la qualité des images transmises et donc sur le débit de transmission, ces commandes peuvent être :
- ZOOM pour agrandir la région spécifiée dans la commande,
- MEILLEURE_RESOLUTION pour obtenir une meilleure résolution de la région spécifiée dans la commande,
- ALLER pour déplacer la région agrandie vers une autre partie de l'image de base.

Si l'utilisateur introduit une commande de zoom, par exemple de la forme "Région(RECTANGLE((80,80),( 176,144)),ZOOM)", pour agrandir une région définie de l'image, le module de contrôle 27 peut appliquer plusieurs solutions pour exécuter cette commande.

Si la caméra est motorisée et comprend un zoom commandé, le module de contrôle 27 émet une commande à appliquer à la caméra pour cadrer au mieux la région indiquée dans la commande.

Si la caméra n'est pas motorisée, ou si la commande n'est pas exécutable totalement par la caméra (par exemple si l'agrandissement demandé dépasse les capacités du zoom de la caméra), le module de contrôle 27 applique au module de capture 22 une commande de changement de format d'entrée des images, afin d'obtenir une plus grande résolution, par exemple demandant le format CIF (352 x 288 pixels) au lieu de QCIF (176 x 144 pixels) précédemment sélectionné. Le module de contrôle 27 active ensuite un module optionnel 23 de recadrage entre le module de capture 22 et le module de codage, afin de ne sélectionner qu'une partie de l'image capturée et plus précisément, la partie de l'image contenant la région indiquée dans la commande reçue. Si le module de codage 24 le supporte, le module de contrôle 27 peut aussi modifier son format de sortie, de manière à correspondre à celui de la région spécifiée, c'est-à-dire dans l'exemple de la commande ci-dessus, 96 x 64 pixels.

Normalement, pour augmenter la résolution d'un flux vidéo, il faut augmenter le débit puisque les informations transmises au module de décodage 30 sont plus importantes. Pour résoudre ce problème, l'invention propose d'augmenter localement la résolution des images vidéo en allouant tout ou partie du débit de transmission disponible à une partie seulement de l'image. La partie émission de la chaîne de traitement vidéo va alors concentrer ses ressources sur la région désirée par l'utilisateur distant, afin d'offrir la meilleure qualité possible en dégradant ou en ne codant pas les zones situées en dehors de la région souhaitée.
Ainsi, si le module de réception 28 reçoit une commande de meilleure résolution, par exemple :
"Région(RECTANGLE((80,80),(176,144)),MEILLEURE_RESOLUTION)", afin d'obtenir une meilleure résolution dans une région définie de l'image, le module de contrôle 27 va agir sur le module de codage 24 pour consacrer le maximum de ressources (débit) au codage de la région indiquée dans la commande, au détriment du reste de l'image.

Si dans les images vidéo reçues, une partie de l'image est fixe, l'utilisateur peut donc agir sur la chaîne vidéo distante à l'aide de cette commande pour ne plus recevoir cette partie fixe et concentrer les ressources de la chaîne de transmission vidéo sur la partie utile de l'image.

Pour déplacer une prise de vue, l'utilisateur peut émettre une commande par exemple de la forme :
Région(RECTANGLE((-176,-20),(0,124)),ALLER).

Dans cette commande, les coordonnées de la région d'image demandée sont exprimées par rapport à la région d'image en cours.

Pour traiter une telle commande, il existe également plusieurs possibilités selon que la source de capture est déplaçable ou non. La source de capture peut être une caméra motorisée ou un module de capture d'une fenêtre dans une image fixe (par exemple une fenêtre d'écran d'ordinateur). Si la source de capture est déplaçable, le module de commande agit directement sur la source pour essayer d'atteindre la région spécifiée dans la commande reçue. Dans le cas contraire, le module de contrôle 27 active et commande un module optionnel 23 de recadrage et lui applique la région de l'image à transmettre.

On peut prévoir que les modifications appliquées à la partie émission de la chaîne de traitement vidéo présentent un caractère temporaire et disparaissent après un laps de temps prédéfini, la partie émission revenant alors à une configuration par défaut.
Alternativement, ces modifications sont définitives, jusqu'à la réception d'une autre commande. On peut alors prévoir une commande de rétablissement d'une configuration par défaut.

Bien entendu, d'autres commandes que celles décrites ci-avant peuvent être prévues, sans sortir du cadre de l'invention. Ainsi par exemple, le terminal distant peut être un serveur qui réalise une image vidéo regroupant plusieurs flux vidéo dans le cadre d'une visioconférence. Dans ce cas, des commandes peuvent être prévues pour agir spécifiquement sur l'un des flux vidéo et sur la présentation des flux vidéo dans l'image.

## Revendications

1. Procédé de commande d'une chaîne de traitement vidéo distante (20), produisant un flux vidéo à transmettre vers un terminal (2, 3), en vue d'agir sur le flux vidéo, ce procédé comprenant des étapes au cours lesquelles le terminal transmet vers la chaîne de traitement vidéo distante, une commande pour modifier le flux vidéo, et la chaîne de traitement vidéo distante exécute la commande sur le flux vidéo avant de le transmettre au terminal,
**caractérisé en ce que** les commandes de modification du flux vidéo, exécutables par la chaîne de traitement vidéo distante (20) comprennent des commandes de traitement à appliquer à une région d'image, comportant la définition d'une région d'image de l'image contenue dans le flux vidéo transmis, associée à la définition d'un traitement à appliquer à la région d'image, l'exécution par la chaîne vidéo distante d'une commande de traitement à appliquer à une région d'image comportant des étapes de sélection dans le flux vidéo de la région d'image définie dans la commande, et d'application à la région d'image sélectionnée dans le flux vidéo du traitement défini dans la commande.

2. Procédé selon la revendication 1,
**caractérisé en ce qu'**il comprend en outre une étape d'activation d'un module optionnel (23, 25) dans la chaîne de traitement vidéo (20) pour exécuter au moins partiellement une commande émise par le terminal (2, 3).

3. Procédé selon la revendication 1 ou 2,
**caractérisé en ce que** les commandes de modification du flux vidéo, exécutables par la chaîne de traitement vidéo (20) comprennent une commande de zoom associée à une région d'image pour agrandir la région d'image.

4. Procédé selon la revendication 3,
**caractérisé en ce que** les commandes de modification du flux vidéo, exécutables par la chaîne de traitement vidéo (20) comprennent une commande de déplacement de la région d'image transmise dans le flux vidéo à la suite de l'exécution d'une commande de zoom.

5. Procédé selon l'une des revendications 1 à 4,
**caractérisé en ce que** les commandes de modification du flux vidéo exécutables par la chaîne de traitement vidéo (20) comprennent une commande d'augmentation de la résolution d'associée à une région d'image pour augmenter la résolution de la région d'image au détriment du reste de l'image transmise par le flux vidéo.

6. Procédé selon l'une des revendications 1 à 5,
**caractérisé en ce que** la chaîne de traitement vidéo (20) rétablit une configuration d'image par défaut dans le flux vidéo après un laps de temps prédéfini à compter de l'exécution d'une commande de modification du flux vidéo.

7. Procédé selon l'une des revendications 1 à 6,
**caractérisé en ce que** les commandes de modification du flux vidéo exécutables par la chaîne de traitement vidéo comprennent une commande de rétablissement d'une configuration par défaut d'image transmise par le flux vidéo.

8. Procédé selon l'une des revendications 1 à 7,
**caractérisé en ce que** la transmission des commandes de modification du flux vidéo transmis, est effectuée conformément au protocole H.323 ou SIP dans des messages qui sont ignorés par le terminal (2, 3) s'il ne les comprend pas.

9. Système de commande d'une première chaîne de traitement vidéo distante (20) produisant un flux vidéo qui est transmis à un premier terminal (2) par l'intermédiaire d'un réseau de télécommunication, en vue d'agir sur le flux vidéo transmis, ce système comprenant des moyens de transmission (33) installés dans le premier terminal pour transmettre vers la première chaîne de traitement vidéo distante, des commandes modification du flux vidéo transmis, et des moyens de réception (28) et d'exécution (27) de commandes de modification de flux vidéo, installés dans la première chaîne de traitement vidéo distante, pour recevoir et exécuter des commandes de modification de flux vidéo sur le flux vidéo à transmettre par la première chaîne de traitement,
**caractérisé en ce que** les commandes de modification du flux vidéo, exécutables par la chaîne de traitement vidéo distante (20) comprennent des commandes de traitement à appliquer à une région d'image, comportant la définition d'une région d'image de l'image contenue dans le flux vidéo transmis, associée à la définition d'un traitement à appliquer à la région d'image, les moyens d'exécution (27) de commandes de modification de flux vidéo, installés dans la première chaîne de traitement vidéo distante, comportant des moyens de sélection dans le flux vidéo de la région d'image définie dans une commande de traitement à appliquer à une région d'image, et des moyens d'application à la région d'image sélectionnée dans le flux vidéo du traitement défini dans la commande.

10. Système selon la revendication 9,
**caractérisé en ce qu'**il comprend des modules optionnels (23, 25) insérés dans la première chaîne de traitement vidéo (20) pour exécuter au moins partiellement les commandes définissant un traitement à appliquer à une région d'image dans le flux vidéo transmis.

11. Système selon la revendication 9,
**caractérisé en ce que** les modules optionnels (23, 25) comprennent un module de recadrage.

12. Système selon la revendication 9 ou 10,
**caractérisé en ce que** la première chaîne de traitement vidéo (20) est installée dans un second terminal (3) comportant des moyens de transmission (33) pour transmettre vers une seconde chaîne de traitement vidéo (20), installée le premier terminal (2), des commandes modification d'un flux vidéo émis par la seconde chaîne de traitement vidéo, la seconde chaîne de traitement vidéo comprenant des moyens de réception (28) et d'exécution (27) des commandes de modification du flux vidéo qu'elle transmet.
